# EUROPÄISCHE PATENTANMELDUNG

(11) **EP 0 795 975 A2**
(43) Veröffentlichungstag der Anmeldung: **17.09.1997**
(21) Anmeldenummer: 97400567.0
(22) Anmeldetag: 14.03.1997
(51) Int. Cl.: H04J 3/17

(54) **Einreichung zur Reduzierung von Übertragungskapazität**

(30) Priorität: 14.03.1996 DE 19610008
(71) Anmelder: ALCATEL ALSTHOM COMPAGNIE GENERALE D'ELECTRICITE, 75008 Paris (FR)
(72) Erfinder: Wolf, Günter, 71735 Eberdingen (DE)
(74) Vertreter: Schätzle, Albin, Dipl.-Phys.

(57) **Zusammenfassung**

Bei der Übertragung von Signalen in einem diensteintegrierenden digitalen Netz (NET) ist die Übertragungskapazität der einzelnen Kanäle vorgegeben. Zwei unabhängige diensteintegrierende digitale Netze (NET) können beispielsweise über eine Funkstrecke miteinander verbunden werden. Auf der Funkstrecke ist nur eine beschränkte Anzahl von Kanälen verfügbar, deren Übertragungskapazität allerdings nicht vorgegeben ist. Vor der Umsetzung der Signale des ersten digitalen Netzes (NET1) in Funksignale, werden die Signale einer Einrichtung (EIN) zur Komprimierung und zur Aufteilung von Signalen zugeführt. Die Einrichtung (EIN) beinhaltet einen Demultiplexer (DMUX) zum Demultiplexen der Signale auf die einzelnen Nutzinformations- und Signalisierungskanäle, eine Schalteinheit (S) zur getrennten Weiterleitung von zu komprimierenden Signalen, z.B. Sprachsignalen, und nicht zu komprimierenden Signalen, z.B. Datensignalen, eine Kodiereinheit (K), in der die zu komprimierenden Signale kodiert werden, einen Multiplexer (MUX) zum Zusammenfügen der kodierten, nicht zu komprimierenden, der Signalisierungs- und der paketvermittelten Datensignale, sowie eine Steuereinheit (µP) zur Steuerung der Schalteinheit (S) in Abhängigkeit von den Inhalten der Signalisierungssignale und zur getrennten Weiterleitung der Signale in den Signalisierungskanälen in Übertragungskanäle mit unterschiedlichen Übertragungskapazitäten.

## Beschreibung

Die Erfindung betrifft eine Einrichtung zur Reduzierung der erforderlichen Übertragungskapazität für in Nutzinformationskanälen und Signalisierungskanälen eines diensteintegrierenden digitalen Netzes übertragene Signale gemäß Patentanspruch 1.

Bei der Übertragung von Signalen über ein diensteintegrierendes digitales Netz, das sog. ISDN, sind die Übertragungskapazitäten der einzelnen Kanäle vorgegeben und nicht variierbar. Ein Nutzinformationskanal zur Übertragung von Sprach- und Datensignalen, der sog. B-Kanal, hat eine Übertragungskapazität von 64 kbit/s. Ein Signalisierungskanal zur Übertragung von Signalisierungssignalen und ggf. von paketvermittelten Datensignalen, der sog. D-Kanal, hat eine Übertragungskapazität von 16 kbit/s. Die standardisierte Übertragung sieht zwei B-Kanäle und einen D-Kanal in der Basisanschlußkonfiguration vor.

Zwei unabhängige diensteintegrierende digitale Netze können beispielsweise über eine Funkstrecke miteinander verbunden werden. Auf der Funkstrecke ist nur eine beschränkte Anzahl von Kanälen verfügbar. Die Übertragungskapazität der einzelnen Kanäle ist nicht vorgegeben.

In dem Produktprospekt "Alcatel 9800" von Alcatel, 1994, ist ein Teilnehmerzugangssystem beschrieben, mittels dessen ein digitales Fernsprechnetz über Funk mit einem anderen digitalen Fernsprechnetz und/oder mit einem Funknetz verbunden werden kann. Es können beispielsweise 1024 Endstellen über 30 Übertragungskanäle mit je 64 kbit/s oder über 60 Übertragungskanäle mit je 32 kbit/s mit dem digitalen Fernsprechnetz verbunden werden. Die Aufteilung in 30 oder 60 Übertragungskanäle ist vorgegeben. Das System mit 60 Übertragungsmerkmalen arbeitet nach dem Verfahren der adaptiven differentiellen Pulskodemodulation, die beispielsweise der ITU-T Recommendation G. 726 zu entnehmen ist, und unterstützt lediglich Sprachdienste. Eine ISDN-Verbindung benötigt zwei 64 kbit/s-Kanäle und einen 16 kbit/s-Kanal zur Unterstützung aller ISDN-Leistungsmerkmale für eine Basisanschlußkonfiguration. Diese Kanäle müssen über Funk bereitgestellt werden.

Es ist deshalb Aufgabe der Erfindung über ein diensteintegrierendes digitales Netz übertragene Signale flexibler zu übertragen.

Diese Aufgabe wird durch die Lehre des Patentanspruchs 1 gelöst. Vorteilhafte Ausgestaltungen sind den abhängigen Patentansprüchen 2 bis 7 zu entnehmen.

Ein besonderer Vorteil der Erfindung ist, daß bei einer vorgegebenen Anzahl von Übertragungskanälen mehr Endstellen, die alle ISDN-Leistungsmerkmale nutzen können, mit einem diensteintegrierenden digitalen Netz verbunden werden können.

Ein weiterer Vorteil der Erfindung ist die Kompatibilität mit standardisierten Modulationsverfahren, wie der adaptiven differentiellen Pulskodemodulation.

Im folgenden wird die Erfindung anhand eines Ausführungsbeispiels unter Zuhilfenahme der Figuren 1 bis 3 erläutert. Es zeigen:
- Fig. 1: eine schematische Darstellung eines erfindungsgemäßen Übertragungssystems,
- Fig. 2: eine schematische Darstellung einer erfindungsgemäßen Einrichtung zur Reduzierung von Übertragungskapazität und zur Komprimierung von Signalen, und
- Fig. 3: einen schematisch dargestellten Aufbau einer erfindungsgemäßen Einrichtung zur Reduzierung von Übertragungskapazität und zur Komprimierung und Dekomprimierung von Signalen.

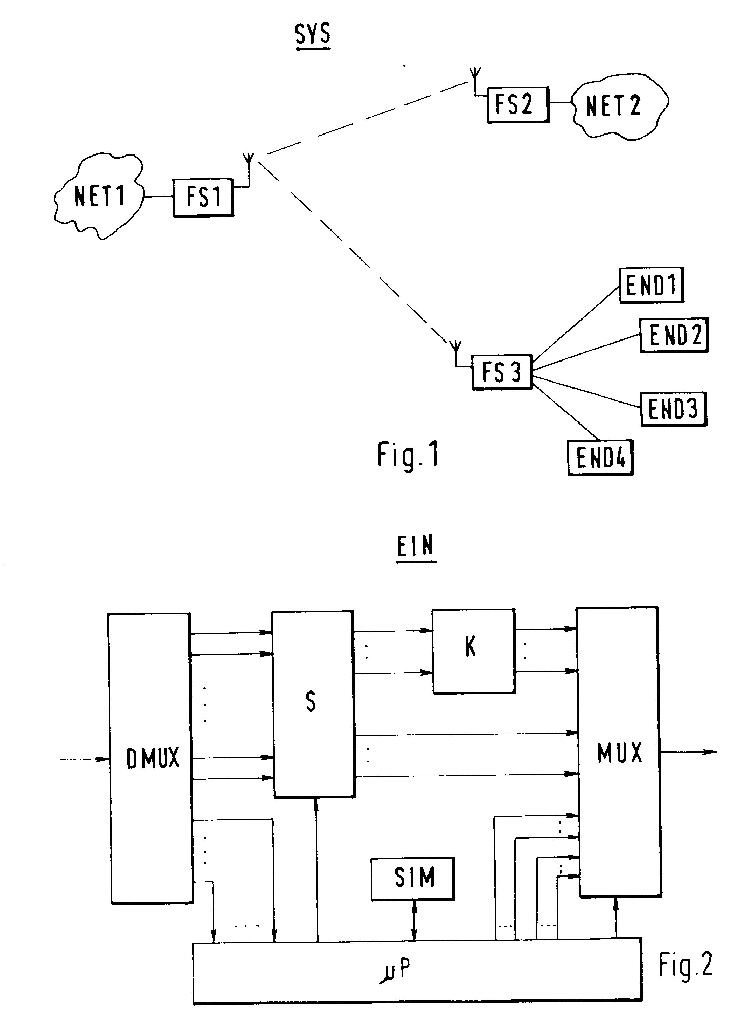

Das Ausführungsbeispiel wird zunächst anhand von Fig. 1 erläutert. Fig. 1 zeigt ein erfindungsgemäßes Übertragungssystem SYS. Das Übertragungssystem SYS beinhaltet ein diensteintegrierendes digitales Netz NET1, das sog. ISDN, das über eine Punkt-zu-Mehrpunkt Verbindung mit einem weiteren Netz NET2 und beispielhaft mit vier Endstellen END1 bis END4 verbunden ist.

Im diensteintegrierenden digitalen Netz NET1 werden Signale in Nutzinformationskanälen, den sog. B-Kanälen, und Signalisierungskanälen, den sog. D-Kanälen, übertragen. Die Signale sind Sprach-, Daten-, Signalisierungs- und paketvermittelte Datensignale. Die Sprach- und Datensignale werden in den Nutzinformationskanälen und die Signalisierungssignale und die paketvermittelte Datensignale in den Signalisierungskanälen übertragen. Bei einer Basisanschlußkonfiguration stehen einer Endstelle beispielsweise zwei B-Kanäle mit jeweils 64 kbit/s Übertragungskapazität und ein D-Kanal mit 16 kbit/s Übertragungskapazität zur Verfügung. Die Übertragungskapazität der Kanäle ist vorgegeben.

Die Punkt-zu-Mehrpunkt Verbindung ist vorzugsweise eine Funkverbindung, kann aber auch eine Glasfaser- oder Koaxialkabelverbindung sein. Das diensteintegrierende digitale Netz NET1 ist mit einer Funkstation FS1 verbunden. In der Funkstation werden die über das diensteintegrierende digitale Netz NET1 übertragenen Signale in Funksignale umgesetzt. Die Funksignale werden über Kanäle übertragen, deren Übertragungskapazität variabel ist. Die Funksignale werden gleichzeitig zu zwei weiteren Funkstationen FS2 und FS3 übertragen, die die für sie bestimmten Signale im Zeitmultiplexverfahren aus den übertragenen Funksignalen ermitteln. Die Übertragung über Funksignale ist beispielsweise bei schwierigem Gelände, z.B. in den Bergen, oder bei länderübergreifenden Verbindungen, die unterschiedliche Netze koppeln sollen von Vorteil. Die Funksignale werden beispielsweise über Richtfunkstrecken übertragen.

Die über das diensteintegrierende digitale Netz NET1 übertragenen Sprachsignale werden vor der Umsetzung in Funksignale in der Funkstation FS1 komprimiert, die Signalisierungskanäle werden auf Übertragungskanäle mit unterschiedlichen Übertragungskapazitäten aufgeteilt. Dies erfolgt in einer Einheit zur Reduzierung von Übertragungskapazität und zur Komprimierung von Signalen, die in der Beschreibung zu Fig. 2 näher beschrieben ist. Die Reduzierung der Übertragungskapazität und die Komprimierung der Signale dienen dazu, die Anzahl der Kanäle auf der Funkübertragungsstrecke unter Beibehaltung der Verfügbarkeit aller ISDN-Leistungsmerkmale zu erhöhen.

Die Funkstation FS2 dient dazu, die empfangenen Funksignale umzusetzen, zu dekomprimieren, an die vorgegebene Übertragungskapazität anzupassen und dem Netz NET2 zuzuführen. Die Anpassung erfolgt invers zur Reduktion. Die Dekomprimierung erfolgt invers zur Komprimierung. Das Netz NET2 ist beispielsweise ein weiteres diensteintegrierendes digitales Netz.

Die Funkstation FS3 dient dazu, die empfangenen Funksignale umzusetzen, zu dekomprimieren, an die vorgegebene Übertragungskapazität anzupassen und den vier Endstellen END1 bis END4 zuzuführen. Die Anpassung erfolgt invers zur Reduktion. Die Dekomprimierung erfolgt invers zur Komprimierung. Die vier Endstellen END1 bis END4 sind beispielsweise ISDN-fähige Endstellen.

Die über das Netz NET2 übertragenen Signale werden in der Funkstation FS2 komprimiert, aufgeteilt und in Funksignale umgesetzt, die im Zeitmultiplexverfahren mit den Funksignalen der Funkstation FS3 zur Funkstation FS1 übertragen werden. Die Funksignale der Funkstation FS3 entstehen aus den von den Endstellen END1 bis END4 ausgesendeten Signalen, die zuvor komprimiert und aufgeteilt werden. Damit kann jede Endstelle eines Netzes mit jeder anderen Endstelle eines anderen Netzes kommunizieren.

Die Komprimierung der Signale erfolgt nach dem Verfahren der adaptiven, differentiellen Pulskodemodulation, die z.B. in der ITU-T Recommendation G. 726 beschrieben ist, oder nach einem anderen Kompressionsverfahren.

Das Ausführungsbeispiel wird nun weiter anhand von Fig. 2 erläutert. Fig. 2 zeigt eine erfindungsgemäße Einrichtung EIN zur Reduzierung der erforderlichen Übertragungskapazität für in Nutzinformationskanälen und Signalisierungskanälen eines diensteintegrierenden digitalen Netzes übertragene Signale und zur Komprimierung der Signale, die Sprach-, Daten- und Signalisierungssignale beinhalten. Die Einrichtung EIN beinhaltet einen Demultiplexer DMUX, eine Simulationseinheit SIM, eine Schalteinheit S, eine Kodiereinheit K, einen Multiplexer MUX und eine Steuereinheit µP.

Die Einrichtung EIN kann in jeder der Funkstationen aus Fig. 1 verwendet werden. Zur vereinfachten Darstellung der Erfindung dient die Einrichtung lediglich der Komprimierung und nicht der Dekomprimierung. Aus diesem Grund ist die Einrichtung EIN nur für unidirektionalen Betrieb verwendbar.

Der Demultiplexer DMUX dient dem Demultiplexen der über das dienstintegrierende digitale Netz übertragenen Signale. Die Signale werden in die einzelnen Nutzinformationskanäle mit jeweils 64 kbit/s und die einzelnen Signalisierungskanäle mit jeweils 16 kbit/s aufgeteilt. Die Sprach- und Datensignale in den Nutzinformationskanälen werden der Schalteinheit S zugeführt. Die Signalisierungssignale und paketvermittelten Datensignale in den Signalisierungskanälen werden der Steuereinheit µP zugeführt.

Die Schalteinheit S beinhaltet mehrere Schaltelemente, die von der Steuereinheit µP angesteuert werden und mittels derer die zu komprimierenden und die nicht zu komprimierenden Signale getrennt weitergeleitet werden können. Die zu komprimierenden Signale werden der Kodiereinheit K zugeführt. Die nicht zu komprimierenden Signale werden dem Multiplexer MUX zugeführt.

Die Kodiereinheit K dient der Kodierung der zu komprimierenden Signale. Sie beinhaltet für jeden Nutzinformationskanal einen Kodierer, mittels dessen Signale nach dem Verfahren der adaptiven, differentiellen Pulskodemodulation kodiert, und auf diese Weise komprimiert werden können. Die zu komprimierenden Signale sind beispielsweise Sprachsignale, bei denen bei einer Kompression von 64 kbit/s auf 32 kbit/s keine wesentlichen Sprachqualitätsverschlechterungen auftreten. Die kodierten Signale werden dem Multiplexer MUX zugeführt.

Der Multiplexer MUX dient dem Multiplexen der kodierten und der nicht zu komprimierenden Signale sowie der Signalisierungssignale und den paketvermittelten Datensignalen. Die kodierten Signale sind beispielsweise kodierte Sprachsignale, die nicht zu komprimierenden Signale beispielsweise Datensignale.

Die Steuereinheit µP ist beispielsweise ein Mikroprozessor oder ein digitaler Signalprozessor. Sie dient der Steuerung der Schalteinheit S des Multiplexers MUX, sowie der getrennten Weiterleitung der Signalisierungssignale und der paketvermittelten Datensignale in Übertragungskanälen mit unterschiedlicher Übertragungskapazitäten zum Multiplexer MUX.

In der Steuereinheit µP werden aus den Inhalten der Signale in den Signalisierungskanälen die benötigten Übertragungskapazitäten für diese Signale ermittelt und daraus die geeigneten Übertragungskanäle abgeleitet. Fordert eine Endstelle beispielsweise den Aufbau einer Sprachverbindung an, so wird dies in der Steuereinheit µP erkannt und für den Aufbau, die Aufrechterhaltung und den Abbau der Verbindung im Übertragungskanal mit einer Übertragungskapazität von beispielsweise 2 kbit/s belegt. Fordert eine Endstelle beispielsweise den Aufbau einer Datenverbindung in einem Nutzinformationskanal an, so wird ebenfalls ein Übertragungskanal mit einer Übertragungskapazität von 2 kbit/s für die Signalisierungssignale belegt. Wird allerdings die Übertragung von paketvermittelten Datensignalen in einem Signalisierungskanal angefordert, so werden die paketvermittelten Datensignale je nach Datenaufkommen beispielsweise zu einem Übertragungskanal mit einer Übertragungskapazität von 16 kbit/s weitergeleitet. Im Multiplexer MUX werden dann die belegten Nutzinformationskanäle und die belegten Übertragungskanäle gesteuert durch die Steuereinheit µP gemultiplext.

Zwischen Endstellen und zugehöriger Vermittlungsstelle werden auch ohne Signalisierungssignale und paketvermittelte Datensignale Informationen ausgetauscht. Diese Informationen werden in Form von Überwachungssignalen übertragen. Die Überwachungssignale beinhalten beispielsweise die aktuelle Uhrzeit, das aktuelle Datum und die Information, ob an der jeweiligen Endstelle Endgeräte angeschlossen sind oder nicht. Um zu verhindern, daß die Übertragungssignale vor den Endstellen über die Funkstrecke zur nächsten Vermittlungsstelle und umgekehrt übertragen werden müssen und währenddessen unnötig Übertragungskapazität belegen, werden die entsprechenden Überwachungssignale der Vermittlungsstelle bzw. der Endstellen in der Simulationseinrichtung SIM simuliert. Diejenige Simulationseinrichtung SIM, die über ein diensteintegrierendes digitales Netz mit einer Vermittlungsstelle verbunden ist, simuliert die Überwachungssignale der Endstellen, beispielsweise die Information, ob Endgeräte angeschlossen sind. Dies kann gesteuert über die Steuereinheit µP softwaretechnisch programmiert werden oder durch ein reales Endgerät, das mit der Steuereinheit µP verbunden ist realisiert werden. Diejenige Simulationseinrichtung SIM, die über ein diensteintegrierendes digitales Netz mit den Endstellen verbunden ist, simuliert die Überwachungssignale der Vermittlungsstelle, beispielsweise Aussenden der aktuellen Uhrzeit und des aktuellen Datums. Dies kann beispielsweise über einen Oszillator und einen Zähler realisiert werden. Erst im Fehlerfall wird eine Verbindung zur realen Vermittlungsstelle aufgebaut und die fehlerbehafteten Überwachungssignale übertragen. Die Uhrzeit kann auch zentral in einem Zusatzkanal mit geringer Übertragungskapazität übertragen werden.

In der Steuereinheit µP werden aus den Inhalten der Signalisierungssignale die Steuersignale für die Schaltelemente der Schalteinheit S abgeleitet. Fordert eine Endstelle beispielsweise den Aufbau einer Sprachverbindung an, so wird dies in der Steuereinheit µP erkannt und das Schaltelement für den zugehörigen Nutzinformationskanal derart geschaltet, daß die Signale im Nutzinformationskanal der Kodiereinheit K zugeführt werden. Fordert eine Endstelle hingegen den Aufbau einer Datenverbindung an, so wird das Schaltelement für den angehörigen Nutzinformationskanal derart geschaltet, daß die Signale im Nutzinformationskanal direkt und ohne weitere Bearbeitung dem Multiplexer MUX zugeführt werden. Bei der Dekomprimierung der kodierten Sprachsignale auf der Empfangsseite muß die Information über die aktuelle Ansteuerung der jeweiligen Schaltelemente bekannt sein. Diese Information wird auf der Empfangsseite beispielsweise ebenfalls aus den Inhalten der Signalisierungssignale abgeleitet. Alternativ kann die Information über die aktuelle Ansteuerung den Signalisierungssignalen in der Steuereinheit µP zugefügt und mit diesen übertragen werden. Eine weitere Alternative ist die Generierung eines Zusatzkanals in der Steuereinheit µP. Die Information über die aktuelle Ansteuerung wird dann in diesem Zusatzkanal übertragen. Der Zusatzkanal wird im Multiplexer MUX zusammen mit den anderen Kanälen gemultiplext. Im Zusatzkanal kann auch die Information über die aktuelle Belegung der Übertragungskanäle mitübertragen werden.

Bei der Komprimierung der Signale handelt es sich demnach um eine bedarfsgerechte, flexible Aufteilung und Komprimierung, die alle ISDN-Leistungsmerkmale unterstützt. ISDN-Nutzinformationskanäle werden nur bedarfsweise zur Verfügung gestellt, um die Übertragungskapazität auf der Funkstrecke zu minimieren.

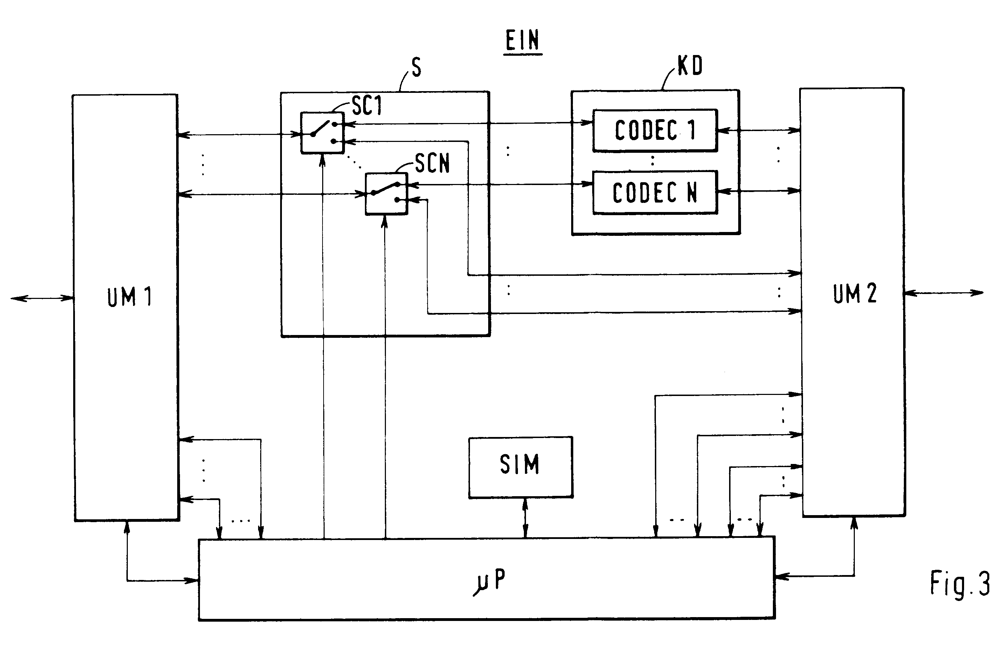

Das Ausführungsbeispiel wird nun abschließend anhand der Fig. 3 erläutert. Fig. 3 zeigt eine erfindungsgemäße Einrichtung EIN zur Reduzierung von Übertragungskapazität sowie zur Komprimierung und Dekomprimierung von Signalen. Die Einrichtung EIN dient der Komprimierung und Aufteilung von Signalen, die über ein diensteintegrierendes digitales Netz übertragen wurden und Sprach-, Daten- und Signalisierungssignale beinhalten, sowie der Dekomprimierung und Anpassung von Signalen, die beispielsweise als Funksignale übertragen wurden, und ist damit in jeder der Funkstationen aus Fig. 1 für einen bidirektionalen Betrieb verwendbar.

Die Einrichtung Ein beinhaltet zwei Umsetzeinheiten UM1, UM2, eine Schalteinheit S, eine Kodier-/Dekodiereinheit KD, eine Steuereinheit µP. und eine Simulationseinheit SIM.

Die Umsetzeinheit UM1 beinhaltet eine Demulitplexer zum Demultiplexen der Signale, die über das diensteintegrierende digitale Netz übertragen wurden und einen Multiplexer zum Multiplexen der Signale, die als Funksignale übertragen wurden. Der Demultiplexer entspricht in seiner Funktion und Arbeitsweise dem Multiplexer auf Fig. 2. Im Multiplexer werden die vom Demultiplexer aufgeteilten Nutzinformations- und Signalisierungskanäle bei der Dekomprimierung und Anpassung zusammengefügt.

Die Schalteinheit S beinhaltet mehrere Schaltelemente SC1 bis SCN, ein Schaltelement SC für jeden Nutzinformationskanal. Die Schalteinheit S entspricht in ihrer Funktion und Arbeitsweise der Schalteinheit aus Fig. 2. Die nicht zu komprimierenden Signale werden der Umsetzeinheit UM2, die zu komprimierenden Signale der Kodier-/Dekodiereinheit KD zugeführt.

Die Kodier-/Dekodiereinheit KD beinhaltet mehrere Sprachkodierer/dekodierer CODEC1 bis CODECN, einen Sprachkodierer/-dekodierer C0DEC für jeden Nutzinformationskanal. Die Kodier-/Dekodiereinheit KD dient der Kompression und Dekompression von Sprachsignalen. Die kodierten und komprimierten Sprachsignale werden der Umsetzeinheit UM2 zugeführt. Die Sprachkodierer/-dekodierer C0DEC1 bis C0DECN arbeiten beispielsweise nach dem Verfahren der adaptiven, differentiellen Pulskodemodulation.

Die Umsetzeinheit UM2 beinhaltet einen Multiplexer zum Multiplexen der kodierten und der nicht zu komprimierenden Signale sowie der Signalisierungssignale und der paketvermittelten Datensignale, die allesamt über das dienstintegrierende digitale Netz übertragen wurden. Der Multiplexer entspricht in seiner Funktion und Arbeitsweise dem Multiplexer aus Fig. 2. Die Umsetzeinheit UM2 beinhaltet ferner eine Demultiplexer zum Demultiplexen der Signale, die als Funksignale übertragen wurden. Die Einrichtung EIN arbeitet im Vollduplexbetrieb, so daß die Kanäle am Eingang des Multiplexers gleich den Kanälen am Ausgang des Demultiplexers sind.

Die Steuereinheit µP ist beispielsweise ein Mikroprozessor oder ein digitaler Signalprozessor. Sie dient der Steuerung der Schalteinheit S, der Umsetzeinheit UM1 und der Umsetzeinheit UM2, sowie der getrennten Weiterleitung der Signalisierungssignale und der paketvermittelten Datensignale vor der Umsetzung in Funksignale und der Anpassung der Übertragungskanäle mit den unterschiedlichen Übertragungskapazitäten an die Signalisierungskanäle mit den vorgegebenen 16 kbit/s Übertragungskapazität für jeden Signalisierungskanal. Die Ansteuerung der Schaltelemente SC1 bis SCN und die Übertragung der Information über deren aktuelle Ansteuerung erfolgt wie zu Fig. 2 beschrieben.

Das Verfahren zur Komprimierung und Aufteilung von Signalen entspricht demjenigen zu Fig. 2 beschriebenen. Aus diesem Grund wird nicht näher darauf eingegangen.

Im folgenden wird das Verfahren der Anpassung von Signalen beschrieben.

Die empfangenen Funksignale werden umgesetzt und dem Demultiplexer in der Umsetzeinheit UM2 zugeführt, in dem sie auf die jeweiligen Nutzinformationskanäle und Überwachungskanäle aufgeteilt werden. In der Steuereinheit µP wird die aktuelle Belegung der Übertragungskanäle beispielsweise aus den Signalen im Zusatzkanal gewonnen. Die Signale in den Übertragungskanälen mit 2 kbit/s und 16 kbit/s werden in die zugehörigen Signalisierungskanäle mit jeweils 16 kbit/s gesteuert durch die Steuereinheit µP übertragen.

Im folgenden wird das Verfahren der Dekomprimierung von Signalen beschrieben.

Die empfangenen Funksignale werden in elektrische Signale umgesetzt und dem Demultiplexer in der Umsetzeinheit UM2 zugeführt. Im Demultiplexer werden sie auf die jeweiligen Nutzinformationskanäle und Übertragungskanäle aufgeteilt. Die Signale im ersten Nutzinformationskanal gelangen beispielsweise über den Kodierer/Dekodierer CODEC1 und parallel über eine Verbindungsleitung zum Schaltelement SC1, das derart angesteuert wird, daß entweder die im Kodierer/Dekodierer C0DEC1 dekodierten und dekomprimierten Signale oder die nicht dekodierten Signale der Verbindungsleitung weitergeleitet werden. Die Ansteuerung des Schaltelements SC1 erfolgt durch die Steuereinheit µP, in der die Information für die aktuelle Ansteuerung aus den zugehörigen Signalisierungssignalen, den Zusatzsignalen oder den Signalen im Zusatzkanal gewonnen wird.

Im Ausführungsbeispiel ist in Fig. 2 eine Einrichtung zur Komprimierung von Signalen angegeben. Die Schalteinheit ist vor der Kodiereinheit angeordnet. Anstelle vor kann die Schalteinheit auch nach der Kodiereinheit angeordnet werden. Dazu ist im Demultiplexer jeder Nutzinformationskanal auf zwei separate Verbindungsleitungen aufzuteilen. Dies erspart u. U. Verdrahtungsaufwand. Aus der Einrichtung zur Komprimierung von Signalen kann eine Einrichtung zur Dekomprimierung von Signalen abgeleitet werden, wenn die Kodiereinheit durch eine Dekodiereinheit ersetzt wird. Die Einrichtung zur Dekomprimierung von Signalen ist auch in beiden Varianten, Schalteinheit vor und nach der Dekodiereinheit möglich.

Beim Ausführungsbeispiel ist für einen Duplexbetrieb in Fig. 3 eine Einrichtung zur Komprimierung und Dekomprimierung von Signalen angegeben. Anstelle einer Einrichtung können auch zwei, eine zur Komprimierung und eine zur Dekomprimierung, wie oben beschrieben verwendet werden. In allen Einrichtungen können aus Gründen der Synchronisation oder von Laufzeitunterschieden Verzögerungsglieder notwendig sein, auf die nicht näher eingegangen wurde.

## Patentansprüche

1. Einrichtung (EIN) zur Reduzierung der erforderlichen Übertragungskapazität für in Nutzinformationskanälen und Signalisierungskanälen eines diensteintegrierenden digitalen Netzes (NET1) übertragene Signale, mit einem Demultiplexer (DMUX, UM1) zum Demultiplexen der Signale, eine Steuereinheit (µP) zur getrennten Weiterleitung der Signale in den Signalisierungskanälen in Übertragungskanäle mit unterschiedlichen Übertragungskapazitäten und einen Multiplexer (MUX, UM2) zum Multiplexen der Nutzinformationskanäle und der belegten Übertragungskanäle.

2. Einrichtung (EIN) nach Anspruch 1, dadurch gekennzeichnet, daß die Einrichtung (EIN) eine Simulationseinheit (SIM) zur Simulation mehrerer Endstellen oder einer Vermittlungsstelle beinhaltet, und daß über die Simulationseinheit (SIM) Überwachungssignale in den Signalisierungskanälen übertragen sind.

3. Einrichtung (EIN) nach Anspruch 1, dadurch gekennzeichnet daß die Einrichtung (EIN) eine Kodiereinheit (K, KD) zur Kodierung von zu komprimierenden Signalen in den Nutzinformationskanälen und eine Schalteinheit (S) zur getrennten Weiterleitung der zu komprimierenden oder kodierten Signale und der nicht zu komprimierenden Signale beinhaltet, und daß die Schalteinheit (S) durch die Steuereinheit (µP) in Abhängigkeit von den Inhalten der Signale in den Signalisierungskanälen ansteuerbar ist.

4. Einrichtung (EIN) nach Anspruch 3, dadurch gekennzeichnet, daß die Kodiereinheit (K) mehrere Sprachkodierer (C0DEC) beinhaltet, und daß Sprachsignale über die Schalteinheit (S) zur Kodiereinheit (K, KD) und Datensignale über die Schalteinheit (S) zum Multiplexer (MUX, UM2) weitergeleitet werden.

5. Einrichtung (EIN) nach Anspruch 1, dadurch gekennzeichnet daß die Information über die aktuelle Belegung der Übertragungskanäle in einem in der Steuereinheit (µP) generierten Zusatzkanal erfolgt.

6. Einrichtung (EIN) nach Anspruch 1, dadurch gekennzeichnet, daß die Einrichtung (EIN) eine Dekodiereinheit (KD) zur Dekodierung von komprimierten Signalen und eine Schalteinheit (S) zur getrennten Weiterleitung von dekodierten oder zu dekomprimierenden Signalen und nicht zu dekomprimierenden Signalen beinhaltet, und daß die Schalteinheit (S) durch die Steuereinheit (µP) ansteuerbar ist.

7. Einrichtung (EIN) nach Anspruch 1, gekennzeichnet durch die Verwendung der Einrichtung (EIN) in einer Funkstation (FS).
